# EUROPÄISCHE PATENTSCHRIFT

(11) **EP 3 195 186 B1**
(45) Veröffentlichungstag und Bekanntmachung des Hinweises auf die Patenterteilung: **13.11.2019**
(21) Anmeldenummer: 15748029.4
(22) Anmeldetag: 04.08.2015
(51) Int. Cl.: B60W 50/04

(54) **VERFAHREN UND VORRICHTUNG ZUM ÜBERWACHEN EINES AUTOMATISCHEN PARKENS EINES FAHRZEUGS**
METHOD AND DEVICE FOR MONITORING AN AUTOMATIC PARKING OF A VEHICLE
PROCÉDÉ ET DISPOSITIF POUR SURVEILLER UN STATIONNEMENT AUTOMATIQUE D'UN VÉHICULE

(30) Priorität: 19.09.2014 DE 102014218921
(43) Veröffentlichungstag der Anmeldung: 26.07.2017
(73) Patentinhaber: Robert Bosch GmbH, 70442 Stuttgart (DE)
(72) Erfinder: FUEHRER, Thomas, 70499 Stuttgart-Weilimdorf (DE)
(86) Internationale Anmeldenummer: PCT/EP2015/067941
(87) Internationale Veröffentlichungsnummer: WO 2016/041689

(56) Entgegenhaltungen:
- EP-A1- 2 295 281
- WO-A1-2006/064544
- WO-A1-2013/156361
- KR-A- 20140 073 131

## Beschreibung

Die Erfindung betrifft ein Verfahren und eine Vorrichtung zum Überwachen eines automatischen Parkens eines Fahrzeugs. Die Erfindung betrifft ferner ein System zum Überwachen eines automatischen Parkens eines Fahrzeugs. Die Erfindung betrifft des Weiteren ein Parksystem zum Parken von Fahrzeugen.

### Stand der Technik

Derzeit gibt es Bestrebungen, ein Fahrzeug automatisch zu parken, ohne dass hierfür ein Fahrer des Fahrzeugs manuell eingreifen muss. So soll zum Beispiel ein Fahrer bei der Einfahrt in ein Parkhaus sein Fahrzeug verlassen und verriegeln können. Das Fahrzeug soll anschließend automatisch parken. Bekannt ist bei den bisherigen automatischen Parkverfahren, dass nach dem Ende des Parkvorgangs ein Fahrer eine Nachricht, zum Beispiel eine SMS, an sein Smartphone gesendet bekommt, dass das Fahrzeug erfolgreich geparkt wurde. Das automatische Parken wird auch als ein "Valet-Parking" bezeichnet.

Es besteht ein Bedarf an einer Überwachung oder an einer Verfolgung des Fahrzeugs während des automatischen Einparkens.

Aus der EP 2 295 281 A1 ist eine Fahrerassistenzeinrichtung bekannt, mit welcher der Fahrer eines Kraftfahrzeugs eine Gefahrsituation während eines autonomen Parkvorgangs des Kraftfahrzeugs einfach erkennen kann. Die Steuereinrichtung der Fahrerassistenzeinrichtung ist dazu ausgelegt, Befehle von einer Fernbedienung zu empfangen und nach Empfangen eines vorbestimmten Unterbrechungsbefehls einen bereits begonnenen Parkvorgang des Kraftfahrzeugs zu unterbrechen. Zumindest eine fahrzeugeigene Kamera ist mit der Steuereinrichtung gekoppelt und gewinnt Bilddaten über einen Umgebungsbereich des Kraftfahrzeugs. Die Steuereinrichtung sendet Signale an die Fernbedienung, die die durch die Kamera gewonnenen Bilddaten oder daraus berechnete Bilddaten umfassen.

Die WO 2013/156361 A1 offenbart ein Rangiersystem zum automatisierten Rangieren eines Kraftfahrzeugs, mit einer fahrzeugseitigen Steuereinrichtung (3), und mit einem durch einen Benutzer bedienbaren tragbaren Kommunikationsgerät, welches dazu ausgelegt ist, mit der fahrzeugseitigen Steuereinrichtung drahtlos zu kommunizieren und hierbei den Rangiervorgang in Abhängigkeit von einer Eingabe des Benutzers an einer Bedieneinrichtung des tragbaren Kommunikationsgeräts freizugeben und/oder zu unterbrechen.

Die KR 2014 0073131 A offenbart ein Verfahren zum automatischen Parken eines Fahrzeugs, wobei externe Kameras, die in einem Parkhaus angeordnet sind für die Kontrolle des automatischen Manövers verwendet werden.

Die WO 2006/064544 A1 offenbart ein Verfahren zum automatischen Parken eines Fahrzeugs, wobei zumindest ein Videobild einer fahrzeugexternen Kamera an das Fahrzeug gesendet wird und auf einem Display des Navigationsgeräts des Fahrzeugs angezeigt wird.

### Offenbarung der Erfindung

Die der Erfindung zugrunde liegende Aufgabe kann daher darin gesehen werden, ein Verfahren zum Überwachen eines automatischen Parkens eines Fahrzeugs bereitzustellen, das es ermöglicht, ein Fahrzeug während des automatischen Parkvorgangs zu überwachen oder zu verfolgen.

Die der Erfindung zugrunde liegende Aufgabe kann des Weiteren darin gesehen werden, eine entsprechende Vorrichtung zum Überwachen eines automatischen Parkens eines Fahrzeugs anzugeben.

Die der Erfindung zugrunde liegende Aufgabe kann des Weiteren darin gesehen werden, ein entsprechendes System zum Überwachen eines automatischen Parkens eines Fahrzeugs anzugeben.

Die der Erfindung zugrunde liegende Aufgabe kann auch darin gesehen werden, ein entsprechendes Parksystem zum Parken von Fahrzeugen bereitzustellen.

Diese Aufgaben werden mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Überwachen eines automatischen Parkens eines Fahrzeugs bereitgestellt, wobei zumindest ein Videobild von einer Durchführung des automatischen Parkens des Fahrzeugs aufgenommen wird, welches an ein mobiles Endgerät gesendet wird.

Gemäß einem weiteren Aspekt wird eine Vorrichtung zum Überwachen eines automatischen Parkens eines Fahrzeugs bereitgestellt, umfassend eine Videoerfassungseinrichtung zum Aufnehmen eines Videobildes einer Durchführung des automatischen Parkens und eine Kommunikationsschnittstelle, die ausgebildet ist, das aufgenommene Videobild an ein mobiles Endgerät zu senden.

Gemäß einem weiteren Aspekt wird ein System zum Überwachen eines automatischen Parkens eines Fahrzeugs bereitgestellt, umfassend die erfindungsgemäße Vorrichtung und ein mobiles Endgerät aufweisend eine Kommunikationsschnittstelle, die ausgebildet ist, das aufgenommene Videobild zu empfangen.

Nach noch einem Aspekt wird ein Parksystem zum Parken von Fahrzeugen bereitgestellt, umfassend einen oder mehrere Parkplätze zum Parken von Fahrzeugen und die erfindungsgemäße Vorrichtung.

Nach einem Aspekt wird ein Fahrzeug bereitgestellt, welches die erfindungsgemäße Vorrichtung umfasst. Das heißt also, dass nach einer Ausführungsform ein Fahrzeug vorgesehen ist, umfassend zumindest eine fahrzeuginterne Videokamera zum Aufnehmen eines Videobildes während des automatischen Parkens und eine Kommunikationsschnittstelle zum Senden des aufgenommenen Videobildes an ein mobiles Endgerät.

Die Erfindung umfasst also insbesondere den Gedanken, den automatischen Parkvorgang des Fahrzeugs aufzunehmen und das aufgenommene Videobild an ein mobiles Endgerät zu senden. Dadurch wird insbesondere der technische Vorteil bewirkt, dass ein Nutzer des mobilen Endgeräts den Parkvorgang seines Fahrzeugs überwachen oder verfolgen kann. Dies insbesondere unabhängig vom Ort des Nutzers. Das heißt also, dass der Fahrer, hier also der Nutzer, weit entfernt von dem Ort sein kann, an welchem das Fahrzeug automatisch geparkt wird. So kann beispielsweise ein Fahrer an der Einfahrt eines Parkhauses sein Fahrzeug verlassen und verriegeln. Sein Fahrzeug parkt dann automatisch, also ohne ein Zutun des Fahrers. Dieser Parkvorgang wird aufgenommen und das mobile Endgerät des Nutzers geschickt. Der Fahrer kann so beispielsweise bereits in einem Einkaufszentrum oder in einem Hotel sein und kann von dort den automatischen Parkvorgang überwachen. Das automatische Parken wird insbesondere als ein "Valet-Parking" bezeichnet. "Automatisch" bedeutet hier insbesondere ohne Zutun oder Eingriff eines Fahrers. Das Fahrzeug parkt autonom oder selbstständig.

Das Senden des Videobildes an das mobile Endgerät wird insbesondere über ein Kommunikationsnetzwerk durchgeführt. Das Kommunikationsnetzwerk umfasst beispielsweise ein Mobilfunkkommunikationsnetzwerk und/oder ein WLAN-Netzwerk.

Nach einer Ausführungsform ist das mobile Endgerät ein Mobiltelefon, ein Smartphone, ein Tablet oder ein Laptop.

In einer anderen Ausführungsform ist vorgesehen, dass das mobile Endgerät ansprechend auf eine Erfassung eines Stoppwunsches ein Stoppsignal an das Fahrzeug sendet, welches ansprechend auf einen Empfang des Stoppsignals mit der Durchführung des Parkens stoppt. Dadurch wird insbesondere der technische Vorteil bewirkt, dass der Nutzer bei einem Problem den Parkvorgang abbrechen kann. Dies aus der Entfernung oder aus der Ferne. Das heißt also, dass der Besitzer des Fahrzeugs jederzeit in den automatischen Parkvorgang eingreifen und das Fahrzeug stoppen kann. Dies zum Beispiel falls der automatische Parkvorgang wegen eines nicht erkannten Hindernisses fehlschlagen würde, dies aber aufgrund des gesendeten Videobildes an das mobile Endgerät des Besitzers erkennbar wird. Somit können in vorteilhafter Weise eventuelle Beschädigungen des Fahrzeugs oder Beschädigungen an weiteren Gegenständen vermieden werden.

Das heißt also, dass der Nutzer des Endgeräts einen Stoppwunsch äußert, wobei das mobile Endgerät diesen Stoppwunsch erfasst. Das heißt also, dass das mobile Endgerät ausgebildet ist, einen Stoppwunsch zu erfassen. Die Erfassung umfasst beispielsweise eine akustische und/oder haptische und/oder taktile und/oder visuelle Erfassung.

Nach einer Ausführungsform ist vorgesehen, dass das mobile Endgerät ansprechend auf eine zweimalige Erfassung eines Stoppwunsches ein Stoppsignal an das Fahrzeug sendet, welches ansprechend auf einen Empfang des Stoppsignals mit der Durchführung des Parkens stoppt. Das heißt also, dass der Fahrer zweimal einen Stoppwunsch äußern muss, bevor das mobile Endgerät ein Stoppsignal an das Fahrzeug sendet. Das heißt also, dass hier das Senden des Stoppsignals durch eine zweimalige Bestätigung des Besitzers an seinem mobilen Endgerät abgesichert ist. Somit kann in vorteilhafter Weise ein unbeabsichtigtes Auslösen des Sendens des Stoppsignals vermieden werden.

Nach einer Ausführungsform ist vorgesehen, dass eine gesicherte Datenverbindung zwischen dem mobilen Endgerät und dem Fahrzeug aufgebaut oder gebildet wird. Bei einer gesicherten Datenverbindung handelt es sich insbesondere um eine verschlüsselte Datenverbindung. Dadurch wird beispielsweise der technische Vorteil bewirkt, dass Unbefugte nicht den automatischen Parkvorgang abbrechen können.

Gemäß einer weiteren Ausführungsform ist vorgesehen, dass im Fall der Durchführung des automatischen Parkens in einem mittels eines Parkraummanagementsystems überwachten Parkraum ansprechend auf die Erfassung des Stoppwunsches eine Nachricht an das Parkraummanagementsystem gesendet wird, um das Parkraummanagementsystem zu informieren, dass im Parkraum ein Problem aufgetreten ist.

Dadurch wird insbesondere der technische Vorteil bewirkt, dass das Parkraummanagementsystem Bescheid weiß, dass ein automatischer Parkvorgang abgebrochen wurde. Da dies in der Regel seine Ursache darin hat, dass unvorhergesehene Hindernisse vorhanden sind, wird dem Parkraummanagementsystem die Möglichkeit gegeben, hier gegebenenfalls manuell einzugreifen und das Hindernis zu beseitigen. Somit kann in vorteilhafter Weise das automatische Parken nach dem Beseitigen des Hindernisses zügig fortgesetzt werden.

Das Stoppsignal kann insbesondere auch als ein Notaus-Signal bezeichnet werden. Auch das Stoppsignal wird insbesondere über das Kommunikationsnetzwerk gesendet.

Gemäß einer weiteren Ausführungsform ist vorgesehen, dass mehrere Videobilder von der Durchführung des automatischen Parkens des Fahrzeugs aufgenommen werden. Insbesondere werden die Videobilder zu unterschiedlichen Zeitpunkten aufgenommen. Das heißt also, dass die Durchführung des automatischen Parkens des Fahrzeugs zeitlich verfolgt werden kann. Die mehreren Videobilder werden an das mobile Endgerät gesendet.

Gemäß einer weiteren Ausführungsform ist vorgesehen, dass das zumindest eine Videobild ein Videobild eines Parkbereichs umfasst, auf welchem das Fahrzeug automatisch geparkt werden soll. Dadurch wird insbesondere der technische Vorteil bewirkt, dass die Endposition, also die Position, in welcher das Fahrzeug automatisch geparkt werden soll, hier also der Parkbereich, für einen Fahrer erkennbar ist. Dieser kann also den Parkvorgang an der Zielposition, also an dem Parkbereich, genau überwachen. Denn meist liegt hier eine beengte Situation vor.

Ein Parkbereich im Sinne der vorliegenden Erfindung ist insbesondere ein Parkstand oder ein Stellplatz. Allgemein ist ein Parkbereich eine Abstellfläche für ein Fahrzeug, auf welchem das Fahrzeug parken, also abgestellt, werden kann.

Eine fahrzeuginterne Kamera ist beispielsweise eine Stereo-Video-Kamera oder eine Multifunktions-/Mono-Kamera. Insbesondere handelt es sich bei der Videokamera um eine Videokamera, die eine Top-View-Funktionalität bereitstellt. Insbesondere sind mehrere fahrzeuginterne Kameras vorgesehen, die jeweils entsprechende Videobilder aufzeichnen oder aufnehmen, wobei die aufgenommenen Videobilder dann an das mobile Endgerät gesendet werden. Somit stehen in vorteilhafter Weise mehrere Blickwinkel der unterschiedlichen fahrzeuginternen Kameras des Fahrzeugs dem Nutzer des Endgeräts zur Verfügung.

Nach einer Ausführungsform ist vorgesehen, dass die fahrzeugexterne Kamera eine fahrzeuginterne Kamera eines weiteren Fahrzeugs ist. Insbesondere sind mehrere fahrzeugexterne Kameras vorgesehen. Das heißt also, dass zumindest eine fahrzeuginterne Kamera eines weiteren Fahrzeugs die Durchführung des automatischen Parkens des Fahrzeugs aufnimmt, wobei die entsprechenden Videobilder dann an das mobile Endgerät gesendet werden. Dadurch wird insbesondere der technische Vorteil bewirkt, dass das Fahrzeug selbst keine fahrzeuginternen Kameras aufweisen muss, wobei dennoch eine Überwachung des automatischen

Parkens durchgeführt werden kann, nämlich mittels der fahrzeugexternen Kameras.

Nach einer Ausführungsform ist vorgesehen, dass die Videobilder der fahrzeuginternen Kamera des weiteren Fahrzeugs über eine Cloudinfrastruktur, beispielsweise über eine Cloudinfrastruktur eines sozialen Netzwerks, dem mobilen Endgerät zur Verfügung gestellt werden.

Gemäß einer weiteren Ausführungsform ist vorgesehen, dass ein fahrzeugexternes Überwachungssystem das Fahrzeug während der Durchführung des automatischen Parkens verfolgt und während der Verfolgung mit dem Fahrzeug zwecks Positionsbestimmung des Fahrzeugs kommuniziert, wobei eine entsprechend bestimmte Fahrzeugposition für eine Positionsverfolgung an das mobile Endgerät gesendet wird. Dadurch wird insbesondere der technische Vorteil bewirkt, dass zusätzlich zu der optischen Überwachung noch Positionen des Fahrzeugs an das mobile Endgerät gesendet werden. Dadurch ist in vorteilhafter Weise eine noch bessere genauere Überwachung des Fahrzeugs möglich. Für das Verfolgen des Fahrzeugs mittels des fahrzeugexternen Überwachungssystems ist beispielsweise vorgesehen, dass das Überwachungssystem ein Nummernschild des Fahrzeugs erkennt und identifiziert, sodass das Fahrzeug anhand seines Nummernschilds wiedererkannt werden kann.

Das fahrzeugexterne Überwachungssystem ist vorzugsweise von einem Parksystem, insbesondere einem Parkhaus, umfasst. Dieses hat zu Beginn des "Valet Parking" Vorgangs (also zu Beginn des automatischen Parkens) die Zielposition des Fahrzeugs bestimmt - also die Zielparklücke. Damit ist dem Parkhausmanagement-System bekannt, wo das Auto hin soll und der "Pfad" bzw. "Folge" der Überwachungskameras kann bestimmt werden, um das Fahrzeug durch das Parkhaus zu verfolgen.

Wenn das Fahrzeug gegebenenfalls einen anderen Parkplatz nehmen muss, da die Zielposition doch durch ein Hindernis (zum Beispiel einen Einkaufswagen oder ein "Nicht-Valet-Parking-Fahrzeug"), so kann es selbstverständlich ausweichen. In einer Ausführungsform wird dann ein Ersatzparkplatz angefragt beim Parkhausmanagementsystem, das eine neue Zielposition ermittelt, so dass eine neue Verfolgung über die Sicherheitskameras oder Überwachungskameras des fahrzeugexternen Überwachungssystems des Parkhauses durchgeführt werden kann.

Die Kommunikation selbst basiert vorzugsweise über Standard-Ethernet - also Vernetzung wie ein PC_Netzwerk oder über WiFi (WLAN) oder über proprietäre Sicherheitsnetzwerke der Gebäudetechnik oder andere dem Fachmann bekannte Kommunikationstechniken.

Nach einer Ausführungsform ist ein fahrzeugexternes Überwachungssystem vorgesehen, welches insbesondere eine oder mehrere Überwachungskameras aufweist. Das Überwachungssystem umfasst also allgemein eine Videoerfassungseinrichtung aufweisend eine oder mehrere Überwachungskameras. Beispielsweise können die Überwachungskameras Referenzpunkte zum Fortschritt des automatischen Parkvorgangs darstellen, wobei vorzugsweise die Überwachungskameras nach erfolgreicher Identifizierung (beispielsweise mittels eines Erkennens des Nummernschilds des Fahrzeugs) das Überwachungsbild, also das aufgenommene Videobild, an den Besitzer des Fahrzeugs, also an das mobile Endgerät, zu spielen oder senden.

Nach einer Ausführungsform umfasst das mobile Endgerät eine Anzeigeeinheit, zum Beispiel einen Bildschirm, insbesondere einen Touchscreen (berührungsempfindlicher Bildschirm), zum Anzeigen des gesendeten Videobildes.

Ausführungsformen hinsichtlich der Vorrichtung, des Systems und des Parksystems ergeben sich in analoger Weise aus Ausführungsformen hinsichtlich des Verfahrens und umgekehrt. Entsprechend gemachte Ausführungen im Zusammenhang mit dem Verfahren gelten analog für die Vorrichtung, das System und das Parksystem und umgekehrt.

Die Erfindung wird im Folgenden anhand von bevorzugten Ausführungsbeispielen näher erläutert. Hierbei zeigen
Fig. 1 ein Ablaufdiagramm eines Verfahrens zum Überwachen eines automatischen Parkens eines Fahrzeugs,
Fig. 2 eine Vorrichtung zum Überwachen eines automatischen Parkens eines Fahrzeugs,
Fig. 3 ein System zum Überwachen eines automatischen Parkens eines Fahrzeugs und
Fig. 4 ein Parksystem zum Parken von Fahrzeugen.

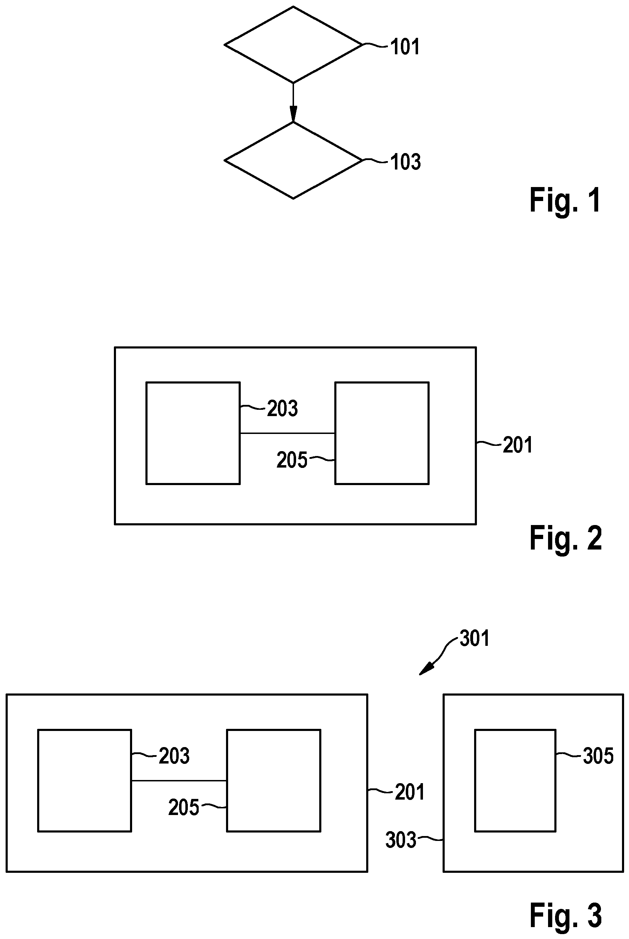

Fig. 1 zeigt ein Ablaufdiagramm eines Verfahrens zum Überwachen eines automatischen Parkens eines Fahrzeugs.

Gemäß einem Schritt 101 wird zumindest ein Videobild von einer Durchführung des automatischen Parkens des Fahrzeugs aufgenommen. In einem Schritt 103 wird das aufgenommene Videobild an ein mobiles Endgerät gesendet. Das mobile Endgerät ist beispielsweise ein Smartphone. Das Senden wird insbesondere über ein Kommunikationsnetzwerk durchgeführt. Das mobile Endgerät zeigt insbesondere das aufgenommene Videobild an.

Fig. 2 zeigt eine Vorrichtung 201 zum Überwachen eines automatischen Parkens eines Fahrzeugs.

Die Vorrichtung 201 umfasst eine Videoerfassungseinrichtung 203 zum Aufnehmen eines Videobildes einer Durchführung des automatischen Parkens. Des Weiteren umfasst die Vorrichtung 201 eine Kommunikationsschnittstelle, die ausgebildet ist, das aufgenommene Videobild an ein mobiles Endgerät zu senden.

Die Videoerfassungseinrichtung 201 umfasst nach einer nicht gezeigten Ausführungsform eine oder mehrere Videokameras. Die Videokameras sind beispielsweise fahrzeuginterne und/oder fahrzeugexterne Videokameras. Das heißt also insbesondere, dass während des automatischen Parkens des Fahrzeugs fahrzeuginterne Videokameras Videobilder einer Fahrzeugumgebung aufnehmen und diese aufgenommenen Videobilder an das mobile Endgerät senden. Insbesondere handelt es sich bei den fahrzeugexternen Videokameras um fahrzeuginterne Videokameras von weiteren Fahrzeugen und/oder von Überwachungskameras eines Überwachungssystems.

Fig. 3 zeigt ein System 301 zum Überwachen eines automatischen Parkens eines Fahrzeugs.

Das System 301 umfasst die Vorrichtung 201 der Fig. 2 sowie ein mobiles Endgerät 303, das eine Kommunikationsschnittstelle 305 aufweist, die ausgebildet ist, das aufgenommene Videobild zu empfangen. Das mobile Endgerät 303 ist beispielsweise ein Smartphone. Das mobile Endgerät 303 umfasst beispielsweise eine Anzeigeeinheit zum Anzeigen des empfangenen Videobildes.

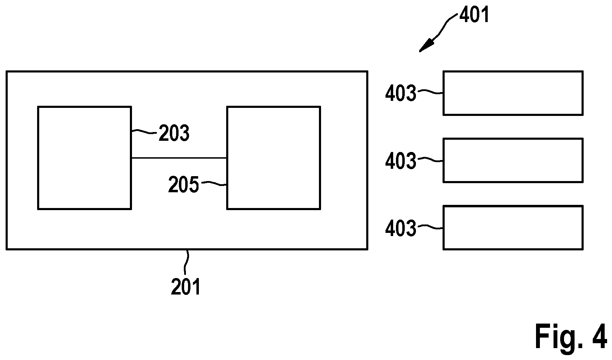

Fig. 4 zeigt ein Parksystem 401 zum Parken von Fahrzeugen.

Das Parksystem 401 umfasst die Vorrichtung 201 der Fig. 2 sowie einen oder mehrere Parkplätze 403 zum Parken von Fahrzeugen.

Nach einer Ausführungsform sind die mehreren Parkplätze einem Parkhaus zugeordnet. Das heißt also, dass das Parksystem ein Parkhaus aufweisend mehrere Parkplätze zum Parken von Fahrzeugen sowie die erfindungsgemäße Vorrichtung umfasst.

Die Erfindung umfasst also insbesondere den Gedanken, bekannte automatische Parkverfahren dahingehend zu erweitern, dass eine Fahrzeugverfolgung als Videobild bereitgestellt wird und dass insbesondere am Ende des Parkvorgangs auch ein Videobild an der Parkposition bereitgestellt wird.

Die im Folgenden aufgeführten Merkmale und Ausführungsformen sind in weiteren Ausführungsformen einzeln oder in Kombination vorgesehen sein:
1. Nutzung des vorhandenen Videobilds der Stereo-Video-Kamera oder Multifunktions-/Mono-Kamera zur Anzeige der aktuellen Sicht aus dem Fahrzeug während der Valet-Parking-Funktion/Ablauf am mobilen Endgerät des Besitzers/Fahrers; damit erhält dieser eine Rückmeldung aus der Sicht seines Fahrzeugs im Blickwinkel der Videokamera (bis zu beispielsweise 45 Grad Öffnungswinkel vor dem Fahrzeug bis beispielsweise 50 m Sichtweite). Weitere Blickwinkel über den Öffnungswinkel hinaus oder neben bzw. hinter dem Fahrzeug sind in der Regel nicht möglich. Die vorstehend genannten konkreten Zahlenwerte sind beispielhaft, aber nicht einschränkend.
2. Nutzung des vorhandenen Videobilds aus der Top-View-Funktionalität zur Anzeige der aktuellen Sicht auf das Fahrzeug während der Valet-Parking-Funktion/Ablauf am mobilen Endgerät des Besitzers/Fahrers; damit erhält dieser eine Rückmeldung zum sehr nahen Umfeld des Fahrzeugs während des Parkvorgangs/Valet-Parking mit 360 Grad Rundumsicht/Aufsicht/Top-View (bis zu beispielsweise maximal 3 bis 5 Meter (nicht einschränkend, sondern beispielhafte Maximalwerte). Weitere Blickwinkel als vorstehend unter Punkt 1. ausgeführt sind in vorteilhafter Weise möglich.
3. Ortung des Fahrzeugs im Parkhaus und speziell der Endposition: Das Video-Überwachungssystem (also erfindungsgemäße System) des Parkhauses wird dabei um ein Verfahren zur Kennzeichenverfolgung erweitert, das heißt ein bekanntes Fahrzeug, das sich zum Valet-Parking angemeldet hat, wird nun per Bilderkennung beobachtet bzw. dessen Kennzeichen als eindeutige Identifizierung eingelesen und durchs Parkhaus verfolgt.
4. Damit stellen die Überwachungskameras des Parkhauses Referenzpunkte zum Fortschritt des Valet-Parking-Vorgangs dar und sie können nach erfolgreicher Identifizierung das Überwachungsbild an den Besitzer des Fahrzeugs auf seinem mobilen Endgerät wie Smartphone/Laptop/Tablet ebenfalls zuspielen/senden.
5. Es ist vorzugsweise vorgesehen, dass am Eingang des Parkhauses, in den Rampen des Parkhauses und pro Etage mindestens zwei Überwachungskameras vorgesehen sind.
6. Des Weiteren kann auch explizit eine Kommunikation zwischen dem Fahrzeug und dem Parkhaus - zum Beispiel an den Überwachungskameras des Parkhauses - stattfinden, um eine noch präzisere Positionsverfolgung sicherzustellen. Die Überwachungskameras liefern dann die Bildinformation an das mobile Endgerät des Besitzers aufgrund dieser Information und nicht (nur) aus der Kennzeichenerkennung.
7. Das erfindungsgemäße Verfahren erweitert das Valet-Parking auch um die Anzeige des Überwachungsbildes und der Surround-Kamera Informationen an der Zielposition/in der Parklücke des Fahrzeugs. Dabei kann der Parkvorgang (meist in einer beengten Situation der Parklücke) genau überwacht werden.
8. Der Besitzer kann nach einer Ausführungsform über das vorgesehene "Notaus" (Notaus-Signal) jederzeit eingreifen und das Fahrzeug stoppen, zum Beispiel falls der Parkvorgang wegen nicht erkannter Hindernisse fehlschlagen würde, dies aber aufgrund der gesendeten Kamerainformationen an das mobile Endgerät des Besitzers erkennbar wird.
9. Das Verfahren sichert nach einer Ausführungsform das Notaus-Signal mit einer zweimaligen Bestätigung des Besitzers an seinem mobilen Endgerät ab bzw. baut eine gesicherte Datenverbindung zwischen dem Endgerät und dem Fahrzeug auf.
10. Wenn ein Notaus-Signal gesendet wird, informiert das Verfahren auch gleich das zuständige Parkraum-Management, um gegebenenfalls manuell einzugreifen und das Hindernis zu beseitigen.
11. Cloud-basierte Erweiterungsmöglichkeiten: Das oben beschriebene Verfahren kann in einer anderen Ausführungsform noch zusätzlich um ein Verfahren erweitert werden, das die Videobilder vorbeifahrender, anderer Parkhaus-Benutzer/Fahrzeuge nutzt, um das eigene Fahrzeug in der Zielposition zu beobachten. Das heißt, mehrere Benutzer sind gegebenenfalls über ein soziales Netzwerk miteinander verbunden und bieten ihre Videobilder aus den Fahrzeugkameras auch den Partnern im Netzwerk an. Deren mobile Endgeräte mit zugehörigen Verfahren/Apps können diese Bildinformation nutzen, um das eigene Fahrzeug als Bild (von außen) zu visualisieren. Dies ist besonders interessant, falls an der Parkposition keine Parkhaus-Überwachungskamera zur Verfügung steht, die gemäß den vorstehenden Ausführungen das Bild der Zielposition liefern kann.

## Patentansprüche

1. Verfahren zum Überwachen eines automatischen Parkens eines Fahrzeugs, wobei zumindest ein Videobild von einer Durchführung des automatischen Parkens des Fahrzeugs aufgenommen (101) wird, welches an ein mobiles Endgerät gesendet (103) wird, wobei das zumindest eine Videobild ein mittels einer fahrzeugexternen Kamera aufgenommenes Videobild umfasst, wobei die fahrzeugexterne Kamera eine fahrzeuginterne Kamera eines weiteren Fahrzeugs ist.

2. Verfahren nach Anspruch 1, wobei das zumindest eine Videobild ein Videobild eines Parkbereichs umfasst, auf welchem das Fahrzeug automatisch geparkt werden soll.

3. Verfahren nach einem der vorherigen Ansprüche, wobei ein fahrzeugexternes Überwachungssystem das Fahrzeug während der Durchführung des automatischen Parkens verfolgt und während der Verfolgung mit dem Fahrzeug zwecks Positionsbestimmung des Fahrzeugs kommuniziert, wobei eine entsprechend bestimmte Fahrzeugposition für eine Positionsverfolgung an das mobile Endgerät gesendet wird.

4. Verfahren nach einem der vorherigen Ansprüche, wobei das mobile Endgerät ansprechend auf eine Erfassung eines Stoppwunsches ein Stoppsignal an das Fahrzeug sendet, welches ansprechend auf einen Empfang des Stoppsignals mit der Durchführung des Parkens stoppt.

5. Verfahren nach Anspruch 4, wobei im Fall der Durchführung des automatischen Parkens in einem mittels eines Parkraummanagementsystems überwachten Parkraum ansprechend auf die Erfassung des Stoppwunsches eine Nachricht an das Parkraummanagementsystem gesendet wird, um das Parkraummanagementsystem zu informieren, dass im Parkraum ein Problem aufgetreten ist.

6. Vorrichtung (201) zum Überwachen eines automatischen Parkens eines Fahrzeugs, umfassend eine Videoerfassungseinrichtung (203) zum Aufnehmen eines Videobildes einer Durchführung des automatischen Parkens und eine Kommunikationsschnittstelle (205), die ausgebildet ist, das aufgenommene Videobild an ein mobiles Endgerät zu senden, wobei die Videoerfassungseinrichtung (203) eine fahrzeugexterne Kamera umfasst, wobei die fahrzeugexterne Kamera eine fahrzeuginterne Kamera eines weiteren Fahrzeugs ist, wobei das zumindest eine Videobild ein mittels der fahrzeugexternen Kamera aufgenommenes Videobild umfasst.

7. System (301) zum Überwachen eines automatischen Parkens eines Fahrzeugs, umfassend die Vorrichtung (201) nach Anspruch 6 und ein mobiles Endgerät (303) aufweisend eine Kommunikationsschnittstelle (305), die ausgebildet ist, das aufgenommene Videobild zu empfangen.

8. Parksystem (401) zum Parken von Fahrzeugen, umfassend einen oder mehrere Parkplätze (403) zum Parken von Fahrzeugen und die Vorrichtung (201) nach Anspruch 6.

## Claims

1. Method for monitoring automatic parking of a vehicle, wherein at least one video image of the execution of the automatic parking of the vehicle is captured (101), which video image is transmitted (103) to a mobile terminal, wherein the at least one video image comprises a video image which is captured by means of a vehicle-external camera, wherein the vehicle-external camera is a vehicle-internal camera of a further vehicle.

2. Method according to Claim 1, wherein the at least one video image comprises a video image of a parking area in which the vehicle is to be parked automatically.

3. Method according to one of the preceding claims, wherein a vehicle-external monitoring system tracks the vehicle during execution of the automatic parking, and during the tracking said system communicates with the vehicle for the purpose of determining the position of the vehicle, wherein a correspondingly determined position of the vehicle is transmitted, for the purpose of position tracking, to the mobile terminal.

4. Method according to one of the preceding claims, wherein in response to detection of a stopping request the mobile terminal transmits a stop signal to the vehicle which stops the execution of the parking in response to reception of the stop signal.

5. Method according to Claim 4, wherein, in the case of execution of the automatic parking in a parking space which is monitored by means of a parking space management system, a message is transmitted to the parking space management system in response to the registering of the stop request, in order to inform the parking space management system that a problem has occurred in the parking space.

6. Device (201) for monitoring automatic parking of a vehicle, comprising a video recording device (203) for capturing a video image of the execution of the automatic parking and a communication interface (205) which is designed to transmit the recorded video image to a mobile terminal, wherein the video recording device (203) comprises a vehicle-external camera, wherein the vehicle-external camera is a vehicle-internal camera of a further vehicle, wherein the at least one video image comprises a video image which is recorded by means of the vehicle-external camera.

7. System (301) for monitoring automatic parking of a vehicle, comprising the device (201) according to Claim 6 and a mobile terminal (303) having a communication interface (305) which is designed to receive the recorded video image.

8. Parking system (401) for parking vehicles, comprising one or more parking spaces (403) for parking vehicles, and comprising the device (201) according to Claim 6.

## Revendications

1. Procédé pour surveiller un stationnement automatique d'un véhicule, dans lequel au moins une image vidéo d'une exécution du stationnement automatique du véhicule est acquise (101) et est envoyée (103) à un terminal mobile, dans lequel ladite au moins une image vidéo comprend une image vidéo acquise au moyen d'une caméra externe au véhicule, dans lequel la caméra externe au véhicule est une caméra interne au véhicule d'un autre véhicule.

2. Procédé selon la revendication 1, dans lequel ladite au moins une image vidéo comprend une image vidéo d'une aire de stationnement sur laquelle le véhicule doit être stationné automatiquement.

3. Procédé selon l'une des revendications précédentes, dans lequel un système de surveillance externe au véhicule suit le véhicule pendant l'exécution du stationnement automatique et communique avec le véhicule pendant le suivi en vue de déterminer la position du véhicule, dans lequel une position de véhicule déterminée de manière correspondante est envoyée au terminal mobile pour le suivi de position.

4. Procédé selon l'une des revendications précédentes, dans lequel le terminal mobile transmet au véhicule, en réponse à une détection d'une demande d'arrêt, un signal d'arrêt, lequel véhicule qui s'arrête en réponse à une réception du signal d'arrêt avec exécution du stationnement.

5. Procédé selon la revendication 4, dans lequel, en cas d'exécution d'un stationnement automatique dans une place de stationnement surveillée par un système de gestion de places de stationnement, un message est envoyé au système de gestion de places de stationnement en réponse à la détection de la demande d'arrêt afin d'informer le système de gestion de places de stationnement qu'un problème s'est produit dans la place de stationnement.

6. Dispositif (201) pour surveiller un stationnement automatique d'un véhicule, comprenant un moyen de détection vidéo (203) pour acquérir une image vidéo d'une exécution du stationnement automatique et une interface de communication (205) conçue pour envoyer l'image vidéo enregistrée à un terminal mobile, dans lequel le moyen de détection vidéo (203) comprend une caméra externe au véhicule, dans lequel la caméra externe au véhicule est une caméra interne au véhicule d'un autre véhicule,
dans lequel ladite au moins une image vidéo comprend une image vidéo acquise au moyen de la caméra externe au véhicule.

7. Système (301) pour surveiller le stationnement automatique d'un véhicule, comprenant le dispositif (201) selon la revendication 6 et un terminal mobile (303) pourvu d'une interface de communication (305) et conçu pour recevoir l'image vidéo acquise.

8. Système de stationnement (401) pour le stationnement de véhicules, comprenant une ou plusieurs places de stationnement (403) pour le stationnement de véhicules et le dispositif (201) selon la revendication 6.
